# EUROPEAN PATENT APPLICATION

(11) **EP 3 263 653 A1**
(43) Date of publication of application: **03.01.2018**
(21) Application number: 17178435.8
(22) Date of filing: 28.06.2017
(51) Int. Cl.: C09D 5/08, C23C 22/05, C23C 22/48

(54) **REINFORCED CHEMICAL CONVERSION COATING**

(30) Priority: 30.06.2016 US 201615197914
(71) Applicant: United Technologies Corporation, Farmington, CT 06032 (US)
(72) Inventor: Jaworowski, Mark R., Glastonbury, CT Connecticut 06033 (US); Smith, Blair A., South Windsor, CT Connecticut 06074 (US); Zhang, Weilong, Glastonbury, CT Connecticut 06033 (US); Kryzman, Michael A., Hartford, CT Connecticut 06107 (US); Zafiris, Georgios S., Glastonbury, CT Connecticut 06033 (US); van Hassel, Bart Antonie, Weatogue, CT Connecticut 06089 (US)
(74) Representative: de Bresser, Sara Jean

(57) **Abstract**

A process of preventing crack formation in chemical conversion coating comprising providing a substrate; introducing a chemical conversion coating material; adding an additive containing a binder to the conversion coating material; and coating the substrate with the chemical conversion coating and the additive.

## Description

### BACKGROUND

The present disclosure is directed to the use of binders that prevent crack formation in chemical conversion coatings when those coatings cure and dry to assist with the protective film formation on metal surfaces.

The oxidation and degradation of metals used in aerospace, commercial, and private industries are a serious and costly problem. To prevent the oxidation and degradation of the metals used in these applications an inorganic protective coating can be applied to the metal surface. This inorganic protective coating, also referred to as a conversion coating, may be the only coating applied to the metal, or the coating can be an intermediate coating to which subsequent coatings are applied.

Chromate based coatings are currently used as inorganic conversion coatings because they provide corrosion resistant properties and adhesion to subsequently applied coating layers. However, due to environmental and health and safety concerns over use of chromate based compounds, there is a need for an environmentally safer and less hazardous replacement that provides equivalent corrosion inhibition and protection to the underlying metal substrate surface, as well as adhesion to subsequently applied coatings.

Chemical Conversion Coating processes have been developed that use trivalent chromium instead of hexavalent chromium species due to changes in environmental regulations and in order to prevent exposure of workers in the metal finishing industry to hexavalent chromium species.

Conversion coatings are typically applied at very low film thicknesses. Slight defects in these very thin films will expose the underlying metal to the corrosive environment and compromise the conversion coating's corrosion inhibition and protection function, leading to substrate corrosion damage, such as pitting in the case of aluminum alloy substrates.

### SUMMARY

In accordance with the present disclosure, there is provided a process (e.g. a process for producing a component as herein described) of preventing crack and pin-hole formation in chemical conversion coating films comprising: providing a substrate; introducing a chemical conversion coating material; adding an additive and/or a binder to the conversion coating material; and coating the substrate with the chemical conversion coating and the additive and/or binder (e.g. a binder as herein described). The additive may be, or may comprise, a binder or binder material system as herein described.

In an embodiment of any of the other embodiments, the binder is selected from the group consisting of polyvinyl-alcohol, polyvinylpyrrolidone, polyvinyl-acetate, styrene-butadiene and hydro-propyl-cellulose.

In an embodiment of any of the other embodiments, the process further comprises strengthening the chemical conversion coating during formation by reducing differential stresses caused during drying and curing of the chemical conversion coating with the binder.

In an embodiment of any of the other embodiments, the process further comprises binding transition metal ions in the chemical conversion coating.

In an embodiment of any of the other embodiments, the process further comprises preventing cracks in the chemical conversion coating.

In an embodiment of any of the other embodiments, the chemical conversion coating comprises trivalent chromium.

In an embodiment of any of the other embodiments, the process further comprises a mixture of the binders.

In accordance with the present disclosure, there is provided a component (e.g. a component made by the process as herein described) comprising a substrate having a surface; and a chemical conversion coating bonded to the surface, wherein the chemical conversion coating comprises a binder configured to prevent crack formation responsive to curing.

In an embodiment of any of the other embodiments, the chemical conversion coating is a composite of trivalent chromium and binder.

In an embodiment of any of the other embodiments, the binder is selected from the group consisting of polyvinyl-alcohol, polyvinylpyrrolidone, polyvinyl-acetate, styrene-butadiene and hydro-propyl-cellulose.

In an embodiment of any of the other embodiments, the binder is configured to bind transition metal ions in the chemical conversion coating.

In an embodiment of any of the other embodiments, the component comprises a metal material.

In an embodiment of any of the other embodiments, a strength of the chemical conversion coating having the binder is greater than a tensile stress of the chemical conversion coating generated during curing.

In an embodiment of any of the other embodiments, the component further comprises a mixture of the binders.

In an embodiment of any of the other embodiments, the chemical conversion coating comprises trivalent chromium.

Other details of the use of binders that prevent crack formation in chemical conversion coatings are set forth in the following detailed description and the accompanying drawing wherein like reference numerals depict like elements.

### BRIEF DESCRIPTION OF THE DRAWINGS

Figure 1 is a schematic representation of a conversion coating applied to a substrate;
Figure 2 is a schematic representation of the conversion coating of Fig. 1 after a period of curing;
Figure 3 is a schematic representation of a conversion coating having an additive applied to a substrate;
Figure 4 is a schematic representation of the conversion coating with additive of Fig. 3 after a period of curing.

### DETAILED DESCRIPTION

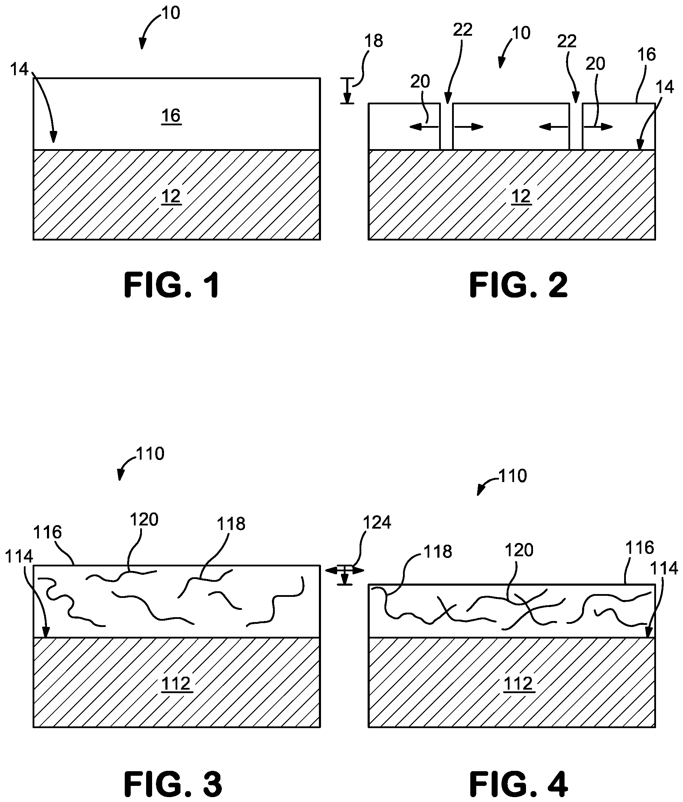

Referring now to Figure 1, there is illustrated a component 10. The component 10 includes a metal substrate 12, for example aluminum alloy, with a surface 14.

Applied to the surface 14 of substrate 12 is a chemical conversion coating film 16. The chemical conversion coating 16 can be very thin with for instance a thickness of about 200 nm. The chemical conversion coating 16 can be viewed as a thin membrane of the chemical conversion coating material that forms during the immersion process or during touch-up and repair activities.

The chemical conversion coating 16 can be applied as a solution or dispersion. The thin film after application to surface 14 can be dried and cured under controlled or uncontrolled humidity conditions.

Referring to Figure 2, the thin film of the chemical conversion coating 16 applied on the surface 14 of substrate 12 has complex mechanical properties that change over time during drying and curing. Evaporation of water from the as applied film 16 during drying, as well as coating curing leaves voids and makes the film shrink both in the perpendicular and lateral to the substrate surface 14 directions 18 and 20. The above lead to the development of pin-holes and cracks 22 in the dried and cured coating film 16, that leave the substrate surface 14 directly exposed to the corrosive environment and make it susceptible to corrosion damage.

Referring now to Figures 3 and 4, a component 110 includes a substrate 112 having a surface 114. A chemical conversion coating film 116 comprising an additive 118 is applied to the surface 114. The additive 118 includes a binder material system 120. The additive 118 can be added to any variety of solutions or dispersions that are used as chemical conversion thin films 116 used for corrosion protection of the surface 114.

The binder materials 120 reduce the stresses in the film 116 when the solution of the chemical conversion coatings 116 dry and cure. The binders 120 strengthen the gel-like network of the corrosion protective coatings 116 during formation and reduce any differential stresses that originate from drying of thin films with nonuniform structures. The binders 120 can polymerize when exposed to chemical agents or radiation and can create a strong bond within the film 116 and between the film 116 and the underlying metal alloy substrate 112.

After being deposited, as the film 116 dries, it shrinks in all directions 124, both laterally and perpendicularly to the metal surface 114. However, due to the binder 120, the film 116 does not form cracks. The film coating 116 remains completely covered over the surface 114.

In an exemplary embodiment, the additive 118 can comprise a binder 120 comprising poly-vinyl alcohol (PVA) having a molecular weight of about 72,000 g/mol can be dissolved in water at a concentration of about 0.1 - 3.5 g/100 cubic centimeters (cm3). The solution can be added to the media that is used to coat the surface of the metal substrate with the chemical conversion coating 116 corrosion protection so that the PVA concentration will be about 0.02 - 1.4 g/100 cubic centimeters (cm3).

In another exemplary embodiment, the additive 118 can comprise a binder 120 comprising hydro-propyl-cellulose (HPC) having a molecular weight of 105 g/mol. HPC can be added to a solution with PVA binder in order to further control the drying stresses in the thin film chemical conversion coating 116 used for protection to the underlying metal surface 114. The HPC concentration in water is about 0.35 g/100 cm3, which can be diluted further to about 0.12 g/100 cm3 by mixing with the solution that contains the chemical conversion coating 116.

In another exemplary embodiment, another type of binder 120 can be polyvinylpyrrolidone (PVP), also at about 0.5 g PVP per 100 cm3. The PVP can bind transition metal ions, such as, trivalent chromium, or zirconium ions. Other exemplary binders 120 can include styrene-butadiene binder and polyvinyl-acetate.

A benefit of the additive 118 with the chemical conversion coating 116 is that trivalent conversion coatings with a binder system 120 will have less corrosion damage in a certain time frame. The trivalent conversion coatings with the additive having a binder system 120 will thereby provide a better protection of the metal substrate 112 against corrosion.

The binders 120 that have been discussed in the detailed description are present in a low concentration but play a critical role in making the thin films of the chemical conversion coating 116 more elastic and the binders 120 thereby prevent the thin films from cracking during drying and curing.

There has been provided the use of binders that prevent crack formation in chemical conversion coatings. While the use of binders that prevent crack formation in chemical conversion coatings has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

Certain preferred embodiments of the invention are as follows:
1. A process of preventing crack and pin-hole formation in chemical conversion coating films comprising:
   providing a substrate;
   introducing a chemical conversion coating material;
   adding a binder to said conversion coating material; and
   coating said substrate with said chemical conversion coating and said additive.
2. The process according to embodiment 1, wherein said binder is selected from the group consisting of polyvinyl-alcohol, polyvinylpyrrolidone, polyvinyl-acetate, styrene-butadiene and hydro-propyl-cellulose.
3. The process according to emdodiment 1, further comprising
   strengthening said chemical conversion coating during formation by reducing differential stresses caused during drying and curing of said chemical conversion coating with said binder.
4. The process according to embodiment 1, further comprising:
   binding transition metal ions in said chemical conversion coating.
5. The process according to embodiment 1, further comprising:
   preventing cracks in said chemical conversion coating.
6. The process according to embodiment 1, wherein said chemical conversion coating comprises trivalent chromium.
7. The process according to embodiment 1, further comprising:
   a mixture of said binders.
8. A component comprising:
   a substrate having a surface; and
   a chemical conversion coating bonded to said surface, wherein said chemical conversion coating comprises a binder configured to prevent crack formation responsive to curing.
9. The component according to embodiment 8, wherein said chemical conversion coating is a composite of trivalent chromium and binder.
10. The component according to embodiment 9, wherein said binder is selected from the group consisting of polyvinyl-alcohol, polyvinylpyrrolidone, polyvinyl-acetate, styrene-butadiene and hydro-propyl-cellulose.
11. The component according to embodiment 9, wherein said binder is configured to bind transition metal ions in said chemical conversion coating.
12. The component according to embodiment 8, wherein said component comprises a metal material.
13. The component according to embodiment 8, wherein a strength of said chemical conversion coating having said binder is greater than a tensile stress of said chemical conversion coating generated during curing.
14. The component according to embodiment 8 further comprising: a mixture of said binders.
15. The component according to embodiment 8, wherein said chemical conversion coating comprises trivalent chromium.

## Claims

1. A process of preventing crack and pin-hole formation in chemical conversion coating films comprising:
providing a substrate;
introducing a chemical conversion coating material;
adding an additive and/or a binder to said conversion coating material; and
coating said substrate with said chemical conversion coating and said additive and/or binder.

2. The process according to claim 1, wherein said binder is selected from the group consisting of polyvinyl-alcohol, polyvinylpyrrolidone, polyvinyl-acetate, styrene-butadiene and hydro-propyl-cellulose.

3. The process according to claim 1 or claim 2, further comprising
strengthening said chemical conversion coating during formation by reducing differential stresses caused during drying and curing of said chemical conversion coating with said binder.

4. The process according to any preceding claim, further comprising:
binding transition metal ions in said chemical conversion coating.

5. The process according to any preceding claim, further comprising:
preventing cracks in said chemical conversion coating.

6. The process according to any preceding claim, wherein said chemical conversion coating comprises trivalent chromium.

7. The process according to any preceding claim, further comprising:
a mixture of said binders.

8. A component comprising:
a substrate having a surface; and
a chemical conversion coating bonded to said surface, wherein said chemical conversion coating comprises a binder configured to prevent crack formation responsive to curing.

9. The component according to claim 8, wherein said chemical conversion coating is a composite of trivalent chromium and binder.

10. The component according to claim 8 or claim 9, wherein said binder is selected from the group consisting of polyvinyl-alcohol, polyvinylpyrrolidone, polyvinyl-acetate, styrene-butadiene and hydro-propyl-cellulose.

11. The component according to any one of claims 8 to 10, wherein said binder is configured to bind transition metal ions in said chemical conversion coating.

12. The component according to any one of claims 8 to 11, wherein said component comprises a metal material.

13. The component according to any one of claims 8 to 12, wherein a strength of said chemical conversion coating having said binder is greater than a tensile stress of said chemical conversion coating generated during curing.

14. The component according to any one of claims 8 to 13 further comprising: a mixture of said binders.

15. The component according to any one of claims 8 to 14, wherein said chemical conversion coating comprises trivalent chromium.
